# EUROPÄISCHE PATENTSCHRIFT

(11) **EP 3 933 694 B1**
(45) Veröffentlichungstag und Bekanntmachung des Hinweises auf die Patenterteilung: **08.11.2023**
(21) Anmeldenummer: 21181040.3
(22) Anmeldetag: 23.06.2021
(51) Int. Cl.: G06K 17/00, G06K 13/00, G06Q 10/08

(54) **VERFAHREN ZUM VOLLSTÄNDIGEN ERKENNEN EINER MEHRZAHL VON MIT TRANSPONDERN VERSEHENEN GEGENSTÄNDEN**
METHOD FOR COMPLETE DETECTION OF A PLURALITY OF OBJECTS PROVIDED WITH TRANSPONDERS
PROCÉDÉ DE DÉTECTION COMPLÈTE D'UNE PLURALITÉ D'OBJETS POURVUS DE TRANSPONDEURS

(30) Priorität: 01.07.2020 DE 102020117306
(43) Veröffentlichungstag der Anmeldung: 05.01.2022
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE); Maaß, Norman, 30455 Hannover (DE); Eichstädt, Thimo, 30989 Gehrden (DE)
(74) Vertreter: Patentanwälte Thömen & Körner

(56) Entgegenhaltungen:
- DE-A1-102008 047 084
- DE-A1-102012 212 856
- DE-T2- 60 213 805
- US-A1- 2010 066 497

## Beschreibung

Die Erfindung betrifft ein Verfahren zum vollständigen Erkennen einer Mehrzahl von mit Transpondern versehenen Gegenständen, die gebündelt einem Lesegerät zugeführt werden, nach den unabhängigen Ansprüchen 1 und 2.

Zur Identifizierung von Gegenständen, die verarbeitet, gewartet, gereinigt oder verkauft werden sollen, können diese mit Transpondern versehen werden, deren Kennungen von Lesegeräten gelesen werden. Werden die Gegenstände zur Vereinfachung des Transports gebündelt, können Probleme beim anschließenden Lesevorgang eines Bündels der Gegenstände auftreten. Diese Probleme können darauf beruhen, dass das Bündel nicht genügend lange im Lesefeld verbleibt und für das elektronische Vereinzeln und Lesen der vereinzelten Transponder nicht genügend Zeit zur Verfügung steht. Weiterhin können auch Antennen der Transponder das Lesefeld örtlich absorbieren, so dass anderen Transpondern keine ausreichende Lesefeldstärke zur Übertragung ihrer Kennungen verbleibt. Auch kann das zur Bündelung verwendete Hilfsmaterial oder ein zur Bündelung dienender Behälter eine Dämpfung oder Abschirmung des Lesefeldes bewirken, so dass nur wenige oder im ungünstigsten Fall gar keine Kennungen der Transponder gelesen werden können.

Aus der DE 10 2012 212 856 A1 ist ein Verfahren zur Erfassung, Selektion und Meldung von zumindest einem aus einer Mehrzahl von berührungslos auslesbaren Transpondern bekannt. Transponder von Werkstücken und von Werkstückträgern werden dabei anhand einer Ziffer der jeweiligen Seriennummer bereits vom Lesegerät erkannt. Ein Abgleich mit einer Datenbank findet nicht statt.

Aus der DE 10 2008 047 084 A1 ist eine Vorrichtung zur reversiblen Zuordnung von automatisch identifizierbaren Gegenständen zu Personen bekannt. Sie umfasst eine Identifikationsvorrichtung für Personen und eine mit den Gegenständen beschickbare Ausgabevorrichtung, wobei die Ausgabevorrichtung zur Erkennung der Zahl und Art der aus ihr entnommenen Gegenstände ausgebildet ist. Ferner ist eine Steuereinheit vorhanden, die die Daten der identifizierten entnommenen Gegenstände der identifizierten entnehmenden Person zuordnet und die die Ausgabevorrichtung steuert.

Aus der US 20100066497 A1 ist ein System zum Verfolgen allgemeiner Artikel in einer geschlossenen Schleife bekannt. Das System umfasst: eine Vielzahl von Teilnehmern, wobei jeder Teilnehmer einem Container zum Aufnehmen von Artikeln zugeordnet ist. Jeder Teilnehmer erzeugt und überträgt Artikelinformationen bezüglich der Artikel in seinem zugeordneten Behälter an einen Server, der zum Empfangen der Artikelinformationen von mehreren Teilnehmern und zum Sammeln der Zirkulation der Artikel in der geschlossenen Schleife dient und mit einer Datenbank verbunden ist. Die Artikelinformationen enthalten Angaben, die den Teilnehmer und jeden Artikel identifizieren. Die Artikelinformationen sind in einem an dem Artikel angebrachten RFID-Tag gespeichert.

Aus der DE 602 13 805 T2 ist ein Verfahren zum Abfragen eines Lagerbereichs, der eine Anzahl von Gegenständen aufweist, bekannt. Jeder Gegenstand trägt einen RFID-Tag. Ein Antennensystem zum Abfragen der RFID-Tags ist auf einem Regal im Lagerbereich angebracht. Es wird ein Abfrageplan bereitgestellt, um einen bestimmten Teil des Lagerbereichs abzufragen.

Der Erfindung liegt die Aufgabe zugrunde, ein Verfahren zum vollständigen Erkennen einer Mehrzahl von mit Transpondern versehenen Gegenständen anzugeben, dass auch bei unvollständiger Erfassung der Kennungen der Transponder der gebündelten Gegenstände eine Erkennung aller Transponder ermöglicht.

Diese Aufgabe wird durch die Merkmale der nebengeordneten Ansprüche 1 und 2 gelöst.

Weiterbildungen und vorteilhafte Ausgestaltungen ergeben sich aus den Unteransprüchen.

Die Erfindung geht davon aus, dass vor einer Bündelung von mit Transpondern versehenen Gegenständen die Gegenstände einzelnen transportiert oder gehandhabt werden. In dieser Phase besteht die Möglichkeit, die Transponder der Gegenstände einzelnen oder höchstens in kleinen Gruppen mittels Lesegeräten zu erfassen. Bei einer Einzelerfassung ist das Auftreten von Kollisionen bei der Datenübertragung durch gleichzeitige Übertragungsversuche anderer Transponder ausgeschlossen. Bei einer Erfassung in kleinen Gruppen muss zwar eine Vereinzelung stattfinden, wenn mehrere Transponder gleichzeitig Übertragungsversuche starten, der Aufenthalt der kleinen Gruppen im Lesefeld des Erfassungs-Lesegeräts kann dann aber so bemessen werden, dass eine vollständige Erfassung aller Einzel-Kennungen der Transponder gewährleistet wird.

Bei im HF-und UHF-Frequenzbereich arbeitenden Transpondern liegt die Zeit zur Erfassung einer Kennung eines Transponders maximal im einstelligen Millisekundenbereich. Wenn durch Kollisionen der Datenübertragungen mehrerer Transponder die Transponder mehrmals zur Datenübertragung ansetzen müssen, verlängert sich die Gesamtzeit allerdings stärker als das mathematische Produkt aus der Zeit zur Erfassung der Kennung eines einzelnen Transponders multipliziert mit der Anzahl der Transponder. Diese Gesamtzeit nimmt mit der Anzahl der in einer Gruppe vorhandenen Transponder exponentiell zu. Bei Gruppen von 5 bis 10 mit Transpondern ausgestatteten Gegenständen sind dann Gesamtzeiten für die Erfassung der Einzel-Kennungen der Transponder noch deutlich unter einer Sekunde zu erwarten. Bei 100 und mehr Gegenständen steigt aber die Wahrscheinlichkeit, dass wesentlich längere Gesamtzeiten zum vollständigen Lesen aller einzelnen Transponder benötigt werden.

Wenn eine Mehrzahl von mit Transpondern versehenen Gegenständen gebündelt wird, um einfacher transportiert und gehandhabt zu werden, kann die Aufenthaltszeit im Lesefeld eines Lesegeräts eventuell nicht mehr ausreichen, um alle Kennungen der Transponder einzelnen vollständig lesen zu können. Die Kennungen mehrerer Transponder bleiben dann ungelesen und eine Erfassung des Verbleibs der Gegenstände ist dann nicht möglich.

Um ein solches Ereignis zu vermeiden, wird die Phase, in der die mit Transpondern versehenen Gegenstände einzelnen oder in kleinen Gruppen vorliegen, genutzt, um deren Kennungen als Einzel-Kennungen vollständig zu erfassen und für eine spätere Bündelung vorzubereiten. Gemäß Anspruch 1 werden alle Einzel-Kennungen in einer Datenbank gespeichert und außerdem ihre Zugehörigkeit zu einem Bündel ebenfalls gespeichert. Durch diese Verknüpfung der Einzel-Kennungen untereinander und gleichzeitig mit dem Bündel reicht es später aus, durch Lesen wenigstens einer der Einzel-Kennungen alle anderen Einzel-Kennungen ebenfalls als erkannt zu werten. Es ist also in jedem Fall ausreichend, weniger als die Gesamtzahl aller zum Bündel gehörenden Einzel-Kennungen zu lesen, um eine Information über die Gesamtzahl aller zum Bündel gehörenden mit Transpondern versehenen Gegenstände zu erhalten. Da in diesem Fall die Einzel-Kennung jedes Transponders den betreffenden Transponder selbst und stellvertretend alle übrigen zum Bündel gehörenden Transponder repräsentiert, reicht das Lesen eines beliebigen Transponders aus. Das Lesen weiterer Transponder erübrigt sich damit.

Gemäß dem nebengeordneten Anspruch 2 wird zusätzlich zur Speicherung der Einzel-Kennungen und ihrer Zugehörigkeit zu einem Bündel eine Bündel-Kennung erzeugt und ebenfalls mit ihrer Zugehörigkeit zum Bündel gespeichert. Außerdem wird die Bündel-Kennung in einem Transponder gespeichert, der dem Bündel zugeordnet ist. Dies kann ein zusätzlicher separater Transponder sein. Es besteht aber auch die Möglichkeit, einen Transponder, der Bestandteil des Bündels ist, vorübergehend als Bündel-Transponder um zu kodieren und ihn mit der Bündel-Kennung zu beschreiben. Das könnte zum Beispiel ein Transponder eines Gegenstands sein, der an einer Außenseite des Bündels angeordnet ist und zuverlässiger lesbar ist, als ein Transponder, der an einem der mitten im Bündel vorhandene Gegenstände angeordnet ist.

Ein zusätzlicher separater Transponder kommt dann in Betracht, wenn die im Bündel vorhandenen an Transponder durch Dämpfungseinflüsse nicht gelesen werden können. Dieser Fall ist zum Beispiel durch eine das Lesefeld absorbierende Umhüllungen des Bündels oder abschirmende Transportbehälter gegeben. In diesem Fall muss der zusätzliche separate Transponder außerhalb der Umhüllung oder des Transportbehälters angeordnet sein und sich in einer Position befinden, in der er zuverlässig vom Lesegerät gelesen werden kann, sobald das Bündel in das Lesefeld gelangt ist. Analog zur Lösung des Anspruchs 1 reicht es aus, die Bündel-Kennung des Bündel-Transponders erfolgreich zu lesen, um alle zum Bündel gehörenden mit Transpondern versehenen Gegenstände als erkannt zu werten.

Gemäß einer Weiterbildung können bereits nach einer ersten Erkanntwertung aller n mit Transpondern versehenen Gegenstände des Bündels weitere Lesungen von Transpondern an Gegenständen desselben Bündels beendet werden.

Eine erste Erkanntwertung ist bereits nach einem ersten erfolgreichen Lesen einer Einzel-Kennung eines beliebigen Transponders und Vergleich der Einzel-Kennung mit den in der Datenbank gespeicherten Daten möglich. Weitere Lesungen von Einzel-Kennungen würden immer wieder zur Erkanntwertung desselben Bündels führen und wären daher überflüssig. Sie würden nur zusätzlichen Energieverbrauch und Datenverkehr verursachen.

Gemäß einer vorteilhaften Ausführung können mittels des Bündel-Lesegeräts Lesungen auf Bündel-Transponder beschränkt werden, indem nur die Bündel-Transponder nach Eintritt in das Lesefeld durch ein Selektions-Kommando des Bündel-Lesegeräts angesprochen werden, während alle übrigen Transponder an dieser Kommunikations-Runde durch die Selektion nicht teilnehmen.

Durch diese Maßnahme kann der Lesevorgang beschleunigt werden, da Kollisionen durch Übertragungsversuche anderer Transponder verhindert werden. Dies wirkt sich besonders vorteilhaft aus, wenn beispielsweise in einem Lager in der Nähe des Bündel-Lesegerätes Transponder vorhanden sind, die beim Einschalten eines Lesefelds ebenfalls Übertragungsversuche starten würden.

Gemäß einer Weiterbildung können die von den Erfassungs-Lesegeräten und Bündel-Lesegeräten gelesenen Einzel-Kennungen, Bündel-Kennungen und Zugehörigkeiten zum Bündel über eine Online-Verbindung an einen Datenbank-Server übermittelt werden, durch den die Einzel-Kennungen, Bündel-Kennungen und Zugehörigkeiten zum Bündel gespeichert oder mit gespeicherten Daten verglichen werden. Bei intakter Online-Verbindung können die Daten der Lesegeräte direkt oder unmittelbar nach Speicherung in lokalen Zwischenspeichern der Lesegeräte zum Datenbank-Server übertragen werden und bei erfolgreicher Übertragung aus den Zwischenspeichern gelöscht werden. Bei Unterbrechungen der Online-Verbindung können die Daten der Lesegeräte so lange in den lokalen Zwischenspeichern der Lesegeräte gespeichert bleiben, bis die Daten nach Wiederherstellen der Online-Verbindung erfolgreich zum Datenbank-Server übertragen wurden.

Obwohl eine Datenkommunikation zwischen den Lesegeräten und dem Datenbank-Server für eine zuverlässige Erkennung der mit Transpondern versehenen Gegenstände erforderlich ist, muss diese Kommunikation nicht in Echtzeit zur Erfassung und Erkennung stattfinden. Es wird davon ausgegangen, dass die mit Transpondern versehenen Gegenstände nach Lesen ihrer Kennungen über einen Zeitraum benutzt, bearbeitet oder gelagert werden, der länger als der Zeitraum der Unterbrechung der Online-Verbindung zwischen den Lesegeräten und dem Datenbank-Server ist. Daher können zeitliche Lücken in der Verfolgung der Gegenstände wieder ausgeglichen werden, ohne dass Informationen über den Verbleib der Gegenstände dauerhaft fehlen.

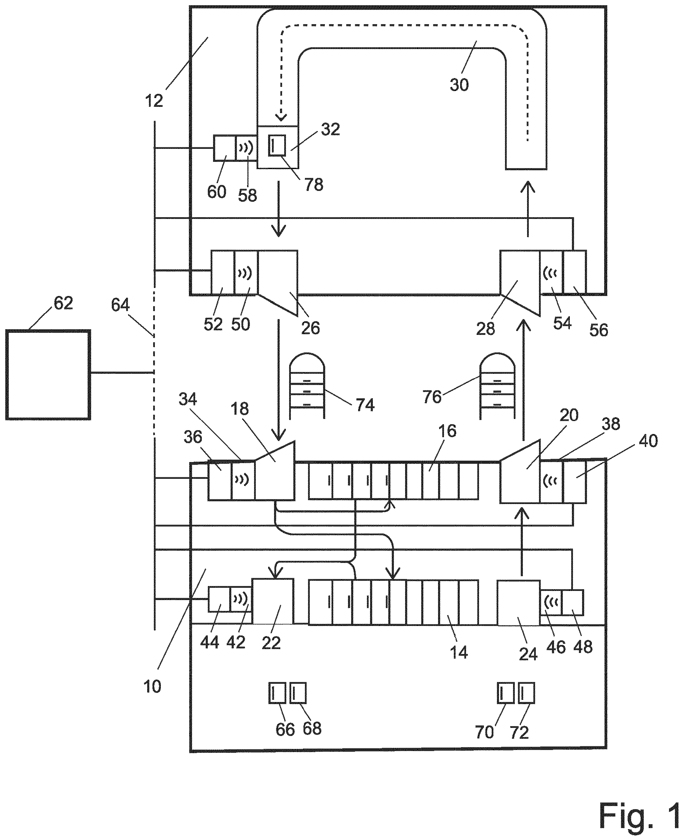

Nachfolgend wird die Erfindung anhand eines Ausführungsbeispiels erläutert, das in der Zeichnung dargestellt ist. Darin zeigt die einzige Figur einen schematischen Grundriss eines Wäschelagers eines Krankenhauses und einer Wäscherei mit Lesegeräten.

Das Wäschelager 10 hat Regale 14, 16 für Wäschestücke, einen Wareneingang 18 und Warenausgang 20 für Bündel-Wäschestücke 74, 76 und eine Wäscheausgabe 22 und Wäscherückgabe 24 von Einzel-Wäschestücken 66, 68, 70, 72 für Benutzer. Am Wareneingang 18 und Warenausgang 20 befinden sich Bündel-Lesegeräte 34, 38 mit Zwischenspeichern 36, 40 und an der Wäscheausgabe 22 und Wäscherückgabe 24 Erfassungs-Lesegeräte 42, 46, mit Zwischenspeichern 44, 48. Die Wäscherei 12 hat einen Wareneingang 28 und Warenausgang 26 für Bündel-Wäschestücke 74, 76 an denen sich Bündel-Lesegeräte 50, 54 mit Zwischenspeichern 52, 56 befinden. Ferner umfasst eine Bearbeitungsstation einer Waschstraße 30, zum Beispiel eine Faltanlage 32 für Wäschestücke 78, ein Erfassungs-Lesegerät 58 mit einem Zwischenspeicher 60. Sämtliche Lesegeräte 34, 38, 42, 46, 50, 54, 58 sind direkt oder über ihre Zwischenspeicher 36, 40, 44, 58, 52, 56, 60 online über eine Online-Verbindung 64, zum Beispiel das Internet, mit einem Datenbank-Server 62 verbunden.

Die Aufgabe der Lesegeräte 34, 38, 42, 46, 50, 54, 58 und des Datenbank-Servers 62 besteht darin, den Lagerbestand, die Entnahme und Rückgabe von Wäschestücken durch Benutzer und die Transportwege vom Wäschelager 10 zu der Wäscherei 12 und zurück sowie innerhalb der Wäscherei 12 zu überwachen und die zulässige Anzahl der Waschungen zu kontrollieren.

Ein Benutzer kann sich an der Wäscheausgabe 22 nach Erfassen seiner Benutzer-Kennung ein oder mehrere Einzel-Wäschestücke 66, 68 ausgeben lassen, deren Transponder einzelnen oder in einer kleinen Gruppe vom Erfassungs-Lesegerät 42 gelesen werden. Die Einzel-Kennungen der Transponder werden dann seinem Benutzerkonto zugeordnet. Nach Benutzung und Rückgabe der Wäschestücke 70, 72 sowie erneutem Erfassen der Benutzer-Kennung des Benutzers werden die Transponder wiederum einzeln oder in einer kleinen Gruppe von dem Erfassungs-Lesegerät 46 an der Wäscherückgabe 24 gelesen und die Einzel-Kennungen der Transponder aus dem Benutzerkonto des Benutzers gelöscht und dem Wäschebestand zugeordnet.

Die in der Wäscherückgabe 24 zurückgegebenen Wäschestücke 70, 72 können in einem Transportbehälter gesammelt werden, bis der Transportbehälter voll ist, und dann als Bündel-Wäschestücke 76 über den Warenausgang 20 des Wäschelagers 10 zum Wareneingang 28 der Wäscherei 12 transportiert werden. Da bis zur endgültigen Füllung des Transportbehälters sämtliche Einzel-Kennungen der Transponder der Wäschestücke erfasst und unter Zuordnung zum selben Bündel zum Datenbank-Server 62 übertragen und dort gespeichert wurden, kann das Bündel durch eine einzige Einzel-Kennung eines beliebigen Transponders des Bündels oder durch eine erzeugte Bündel-Kennung repräsentiert werden. Bei Lesungen im Rahmen des Weitertransports des Bündels zur Wäscherei 12 reicht somit das erfolgreiche Lesen einer Einzel-Kennung eines beliebigen Transponders oder der Bündel-Kennung aus, um den Verbleib der im Bündel zusammengefassten Wäschestücke zu kennen. Beim Lesen des Bündels durch das jeweilige Bündel-Lesegerät 38 am Warenausgang 20 des Wäschelagers 10 und am Wareneingang 28 der Wäscherei 12 wird somit erfasst, welche Wäschestücke vom Wäschelagerbestand des Wäschelagers 10 entfernt und welche Wäschestücke der Wäscherei 12 zugeführt wurden.

Nach Reinigung der Wäschestücke in der Wäscherei 12 besteht erneut die Möglichkeit, Einzel-Kennungen der Transponder der Wäschestücke durch ein Erfassungs-Lesegerät zu lesen. Ein solches Erfassungs-Lesegerät 58 ist an einer Faltstation 32 der Waschstraße 30 angeordnet sein. Die gefalteten Einzel-Wäschestücke 78 können dann in kleinen Gruppen oder in einer Gesamtheit gebündelt werden und in einem Transportbehälter zum Wäschelager 10 des Krankenhauses verbracht werden. Da wiederum bis zur endgültigen Füllung des Transportbehälters sämtliche Einzel-Kennungen der Transponder der Wäschestücke erfasst und unter Zuordnung zum selben Bündel zum Datenbank-Server 62 übertragen und dort gespeichert wurden, kann das Bündel durch eine einzige Einzel-Kennung eines beliebigen Transponders des Bündels oder durch eine erzeugte Bündel-Kennung repräsentiert werden. Bei Lesungen im Rahmen des Rücktransports der Bündel-Wäschestücke 74 zum Wäschelager 10 des Krankenhauses reicht somit das erfolgreiche Lesen einer Einzel-Kennung eines beliebigen Transponders oder der Bündel-Kennung aus, um den Aufenthalt der im Bündel zusammengefassten Wäschestücke zu kennen. Beim Lesen des Bündels durch das jeweilige Bündel-Lesegerät 50, 34 am Warenausgang 26 der Wäscherei 12 und am Wareneingang 18 des Wäschelagers 10 wird somit erfasst, welche Wäschestücke die Wäscherei 12 verlassen haben und welche Wäschestücke dem Lagerbestand des Wäschelagers 10 zugeführt wurden.

**Bezugszeichenliste:**

| | | | |
|---|---|---|---|
| 10 | Wäschelager | 50 | Bündel-Lesegerät |
| 12 | Wäscherei | 52 | Zwischenspeicher |
| 14 | Regal | 54 | Bündel-Lesegerät |
| 16 | Regal | 56 | Zwischenspeicher |
| 18 | Wareneingang Wäschelager | 58 | Erfassung-Lesegerät |
| 20 | Warenausgang Wäschelager | 60 | Zwischenspeicher |
| 22 | Wäscheausgabe | 62 | Datenbank-Server |
| 24 | Wäscherückgabe | 64 | Online-Verbindung |
| 26 | Warenausgang Wäscherei | 66 | Einzel-Wäschestück |
| 28 | Wareneingang Wäscherei | 68 | Einzel-Wäschestück |
| 30 | Waschstraße | 70 | Einzel-Wäschestück |
| 32 | Faltanlage | 72 | Einzel-Wäschestück |
| 34 | Bündel-Lesegerät | 74 | Bündel-Wäschestücke |
| 36 | Zwischenspeicher | 76 | Bündel-Wäschestücke |
| 38 | Bündel-Lesegerät | 78 | Einzel-Wäschestück |
| 40 | Zwischenspeicher | | |
| 42 | Erfassung-Lesegerät | | |
| 44 | Zwischenspeicher | | |
| 46 | Erfassung-Lesegerät | | |
| 48 | Zwischenspeicher | | |

## Patentansprüche

1. Verfahren zum vollständigen Erkennen einer Mehrzahl von mit Transpondern versehenen Gegenständen (74, 76) mit den folgenden Schritten:
• Lesen von Einzel-Kennungen von Transpondern, mit denen die Gegenstände eines Bündels versehen sind, einzeln oder in Gruppen mittels eines Erfassungs-Lesegeräts (42, 46, 58),
• Speichern der Einzel-Kennungen und deren Zugehörigkeit zum Bündel in einer Datenbank (62),
• Zuführen des Bündels zu einem Bündel-Lesegerät (34, 38, 50, 54),
• Lesen einer beliebigen Anzahl 0 < i < n der Einzel-Kennungen der Transponder, mit i als Anzahl der Lesungen und n als Zahl der gesamten Einzel-Kennungen, mittels des Bündel-Lesegeräts (34, 38, 50, 54),
• Vergleichen der i gelesenen Einzel-Kennungen mit n in der Datenbank (62) gespeicherten Einzel-Kennungen,
• Werten aller n mit Transpondern versehenen Gegenstände (74, 76) des Bündels als erkannt, falls eine der i gelesenen Einzel-Kennungen mit einer der n in der Datenbank (62) gespeicherten Einzel-Kennungen übereinstimmt.

2. Verfahren zum vollständigen Erkennen einer Mehrzahl von mit Transpondern versehenen Gegenständen (74, 76) mit den folgenden Schritten:
• Lesen von Einzel-Kennungen von Transpondern, mit denen die Gegenstände eines Bündels versehen sind, einzeln oder in Gruppen mittels eines Erfassungs-Lesegeräts (42, 46, 58),
• Speichern der Einzel-Kennungen und deren Zugehörigkeit zum Bündel in einer Datenbank (62),
• Erzeugen einer Bündelkennung,
• Speichern der Bündelkennung und deren Zugehörigkeit zum Bündel in der Datenbank (62),
• Speichern der Bündelkennung zusätzlich in einem separaten, am Bündel angeordneten Bündel-Transponder oder einem vorübergehend als Bündel-Transponder umcodierten Transponder des Bündels selbst,
• Zuführen des Bündels zu einem Bündel-Lesegerät (34, 38, 50, 54),
• Lesen wenigstens der Bündel-Kennung des Bündel-Transponders,
• Vergleichen der gelesenen Bündel-Kennung des Bündel-Transponders mit der in der Datenbank (62) gespeicherten Bündel-Kennung,
• Werten aller mit Transpondern versehenen Gegenstände (74, 76) des Bündels als erkannt, falls die gelesene Bündel-Kennung des Bündel-Transponders mit der in der Datenbank (62) gespeicherten Bündel-Kennung übereinstimmt.

3. Verfahren nach Anspruch 1, **dadurch gekennzeichnet, dass** bereits nach einer ersten Erkanntwertung aller n mit Transpondern versehenen Gegenstände des Bündels weitere Lesungen von Transpondern an Gegenständen desselben Bündels beendet werden.

4. Verfahren nach Anspruch 2, **dadurch gekennzeichnet, dass** mittels des Bündel-Lesegeräts (34, 38, 50, 54) Lesungen auf Bündel-Transponder beschränkt werden, indem nach Eintritt in das Lesefeld durch ein Selektions-Kommando des Bündel-Lesegeräts (34, 38, 50, 54) nur die Bündel-Transponder an der Kommunikation mit dem Bündel-Lesegerät (34, 38, 50, 54) teilnehmen.

5. Verfahren nach einem der Ansprüche 1 bis 4, **dadurch gekennzeichnet, dass** die von den Erfassungs-Lesegeräten (42, 46, 58) und Bündel-Lesegeräten (34, 38, 50, 54) gelesenen Einzel-Kennungen, Bündel-Kennungen und Zugehörigkeiten zum Bündel über eine Online-Verbindung (64) an einen Datenbank-Server (62) übermittelt werden, durch den die Einzel-Kennungen, Bündel-Kennungen und Zugehörigkeiten zum Bündel gespeichert oder mit gespeicherten Daten verglichen werden, bei intakter Online-Verbindung (64) die Daten der Lesegeräte (34, 38, 42, 46, 50, 54, 58) direkt oder unmittelbar nach Speicherung in lokalen Zwischenspeichern (36, 40, 44, 48, 52, 56, 60) der Lesegeräte (34, 38, 42, 46, 50, 54, 58) zum Datenbank-Server (62) übertragen werden und bei erfolgreicher Übertragung aus den Zwischenspeichern (36, 40, 44, 48, 52, 56, 60) gelöscht werden und dass bei Unterbrechungen der Online-Verbindung (64) die Daten der Lesegeräte (34, 38, 42, 46, 50, 54, 58) solange in den lokalen Zwischenspeichern (36, 40, 44, 48, 52, 56, 60) der Lesegeräte (34, 38, 42, 46, 50, 54, 58) gespeichert werden, bis die Daten nach Wiederherstellen der Online-Verbindung (64) erfolgreich zum Datenbank-Server (62) übertragen wurden.

## Claims

1. Method for completely detecting a plurality of objects (74, 76) provided with transponders, having the following steps of:
• reading individual identifiers of transponders, with which the objects in a bundle are provided, individually or in groups by means of a capture reading device (42, 46, 58),
• storing the individual identifiers and their affiliation with the bundle in a database (62),
• supplying the bundle to a bundle reading device (34, 38, 50, 54),
• reading any desired number 0 < i < n of the individual identifiers of the transponders, where i is the number of reading operations and n is the total number of individual identifiers, by means of the bundle reading device (34, 38, 50, 54),
• comparing the i individual identifiers that have been read with n individual identifiers stored in the database (62),
• classifying all n objects (74, 76) in the bundle which are with transponders as detected if one of the i individual identifiers that have been read corresponds to one of the n individual identifiers stored in the database (62).

2. Method for completely detecting a plurality of objects (74, 76) provided with transponders, having the following steps of:
• reading individual identifiers of transponders, with which the objects in a bundle are provided, individually or in groups by means of a capture reading device (42, 46, 58),
• storing the individual identifiers and their affiliation with the bundle in a database (62),
• generating a bundle identifier,
• storing the bundle identifier and its affiliation with the bundle in the database (62),
• additionally storing the bundle identifier in a separate bundle transponder arranged on the bundle or a transponder of the bundle itself that has been temporarily recoded as a bundle transponder,
• supplying the bundle to a bundle reading device (34, 38, 50, 54),
• reading at least the bundle identifier of the bundle transponder,
• comparing the read bundle identifier of the bundle transponder with the bundle identifier stored in the database (62),
• classifying all objects (74, 76) in the bundle which are provided with transponders as detected if the read bundle identifier of the bundle transponder corresponds to the bundle identifier stored in the database (62).

3. Method according to Claim 1, **characterized in that**, even after all n objects in the bundle which are provided with transponders have first been classified as detected, further reading operations of transponders on objects in the same bundle are terminated.

4. Method according to Claim 2, **characterized in that** the bundle reading device (34, 38, 50, 54) is used to restrict reading operations to bundle transponders by virtue of only the bundle transponders participating in the communication with the bundle reading device (34, 38, 50, 54) by virtue of a selection command from the bundle reading device (34, 38, 50, 54) after entering the reading field.

5. Method according to one of Claims 1 to 4, **characterized in that** the individual identifiers, bundle identifiers and affiliations with the bundle which have been read by the capture reading devices (42, 46, 58) and bundle reading devices (34, 38, 50, 54) are transmitted via an online connection (64) to a database server (62) which stores the individual identifiers, bundle identifiers and affiliations with the bundle or compares them with stored data, the data from the reading devices (34, 38, 42, 46, 50, 54, 58) are transmitted to the database server (62) in the case of an intact online connection (64) directly or immediately after being stored in local buffers (36, 40, 44, 48, 52, 56, 60) of the reading devices (34, 38, 42, 46, 50, 54, 58) and, when successfully transmitted, are deleted from the buffers (36, 40, 44, 48, 52, 56, 60), and **in that**, in the event of interruptions in the online connection (64), the data from the reading devices (34, 38, 42, 46, 50, 54, 58) are stored in the local buffers (36, 40, 44, 48, 52, 56, 60) of the reading devices (34, 38, 42, 46, 50, 54, 58) until the data have been successfully transmitted to the database server (62) after the online connection (64) has been restored.

## Revendications

1. Procédé de reconnaissance complète d'une pluralité d'objets (74, 76) pourvus de transpondeurs, comprenant les étapes suivantes :
* lecture d'identificateurs individuels de transpondeurs, desquels sont pourvus les objets d'un paquet, individuellement ou en groupes au moyen d'un lecteur d'acquisition (42, 46, 58),
* enregistrement des identificateurs individuels et de leur appartenance au paquet dans une base de données (62),
* acheminement du paquet à un lecteur de paquets (34, 38, 50, 54),
* lecture d'un nombre quelconque 0 < i < n des identificateurs individuels du transpondeur, avec i désignant le nombre de lectures et n le nombre total d'identificateurs individuels, au moyen du lecteur de paquets (34, 38, 50, 54),
* comparaison des i identificateurs individuels lus avec n identificateurs individuels enregistrés dans la base de données (62),
* valorisation de tous les n objets (74, 76) du paquet pourvus de transpondeurs comme étant reconnus dans le cas où l'un des i identificateurs individuels coïncide avec l'un des n identificateurs individuels enregistrés dans la base de données (62).

2. Procédé de reconnaissance complète d'une pluralité d'objets (74, 76) pourvus de transpondeurs, comprenant les étapes suivantes :
* lecture d'identificateurs individuels de transpondeurs, desquels sont pourvus les objets d'un paquet, individuellement ou en groupes au moyen d'un lecteur d'acquisition (42, 46, 58),
* enregistrement des identificateurs individuels et de leur appartenance au paquet dans une base de données (62),
* génération d'un identificateur de paquet,
* enregistrement de l'identificateur de paquet et de son appartenance au paquet dans la base de données (62),
* enregistrement de l'identificateur de paquet en plus dans un transpondeur de paquet séparé, disposé sur le paquet, ou dans un transpondeur du paquet lui-même réencodé provisoirement en tant que transpondeur de paquet,
* acheminement du paquet à un lecteur de paquets (34, 38, 50, 54),
* lecture d'au moins l'identificateur de paquet du transpondeur de paquet,
* comparaison de l'identificateur de paquet lu du transpondeur de paquet avec l'identificateur de paquet enregistré dans la base de données (62),
* valorisation de tous les objets (74, 76) du paquet pourvus de transpondeurs comme étant reconnus dans le cas où l'identificateur de paquet lu du transpondeur de paquet coïncide avec l'identificateur de paquet enregistré dans la base de données (62).

3. Procédé selon la revendication 1, **caractérisé en ce que** déjà après une première valorisation de reconnaissance de tous les n objets du paquet pourvus de transpondeurs, il est mis fin à des lectures supplémentaires des transpondeurs sur les objets du même paquet.

4. Procédé selon la revendication 2, **caractérisé en ce que** les lectures sur les transpondeurs de paquet sont limitées au moyen du lecteur de paquets (34, 38, 50, 54) **en ce qu'**après la pénétration dans le champ de lecture, par une commande de sélection du lecteur de paquets (34, 38, 50, 54), seuls les transpondeurs de paquet participent à la communication avec le lecteur de paquets (34, 38, 50, 54).

5. Procédé selon l'une des revendications 1 à 4, **caractérisé en ce que** les identificateurs individuels, les identificateurs de paquet et les appartenances au paquet lus par les lecteurs d'acquisition (42, 46, 58) et les lecteurs de paquets (34, 38, 50, 54) sont communiqués par le biais d'une connexion en ligne (64) à un serveur de base de données (62), par lequel les identificateurs individuels, les identificateurs de paquet et les appartenances au paquet sont enregistrés o comparés avec des données enregistrées, en cas de connexion en ligne (64) intacte, les données des lecteurs (34, 38, 42, 46, 50, 54, 58) sont transmises directement ou indirectement au serveur de base de données (62) après l'enregistrement dans des mémoires intermédiaires locales (36, 40, 44, 48, 52, 56, 60) des lecteurs (34, 38, 42, 46, 50, 54, 58), et si la transmission réussit, sont effacés des mémoires intermédiaires (36, 40, 44, 48, 52, 56, 60), et **en ce qu'**en cas d'interruptions de la connexion en ligne (64) les données des lecteurs (34, 38, 42, 46, 50, 54, 58) sont enregistrées dans les mémoires intermédiaires locales (36, 40, 44, 48, 52, 56, 60) des lecteurs (34, 38, 42, 46, 50, 54, 58) jusqu'à ce que la transmission des données au serveur de base de données (62) ait réussi après le rétablissement de la connexion en ligne (64).
